# EUROPEAN PATENT SPECIFICATION

(11) **EP 2 879 008 B1**
(45) Date of publication and mention of the grant of the patent: **04.07.2018**
(21) Application number: 13194789.7
(22) Date of filing: 28.11.2013
(51) Int. Cl.: G05B 9/02, B61L 19/06, B61L 21/04

(54) **Method for handling a safety critical command in a computer network**
Verfahren zur Handhabung eines sicherheitskritischen Befehls in einem Computernetzwerk
Procédé de manipulation d'une commande critique de sécurité dans un réseau informatique

(43) Date of publication of application: 03.06.2015
(73) Proprietor: Thales Management & Services Deutschland GmbH, 71254 Ditzingen (DE)
(72) Inventor: Müller, Frank, 12555 Berlin (DE)
(74) Representative: Kohler Schmid Möbus Patentanwälte

(56) References cited:
- EP-A1- 2 253 524
- DE-A1- 4 432 419
- DE-A1-102005 013 194
- DE-A1-102006 029 851
- DE-A1-102010 015 285

## Description

### Background of the invention

The invention relates to a method for handling a safety critical command in a computer network.

Such a method is known from DE 10 2006 029 851 A1.

A safety critical command according to the invention is a command concerning execution of a safety critical process on an element of a safety critical system (e.g. to emergency switch the points of a railway track), where "safety" is related to failure revelation, i.e. the higher the failure revelation the higher the safety category. The expression "safe" is used in the context of exclusion of dangerous outputs of the system, whereas the expression "secured" means that undesired impact of the environment to the system is prevented.

DE 44 32 419 A1 discloses a method for handling safety critical commands of a safe computer EKIR of an interlocking to a safe area computer. A random number is created by the EKIR and transmitted to the area computer. In order to authorize a command the user has to input the random number which is sent to EKIR, where the input and the original random number is compared.

DE 10 2010 015 285 A1 discloses a method for confirming a safe state of a safety critical system (railway signaling system), wherein an activation codes is output to the user that cannot be machine-read. The activation code has to be input manually by the user.

The known solutions for handling safety critical commands are usually based on critical command procedure, wherein the operator has to confirm a transaction to be carried out by activating at least one confirmation button as disclosed in DE 10 2006 029 851 A1, or TAN-procedures as known from http://en.wikipedia.org/wiki/Transaction authentication_number. In order to authorize the execution of a safety critical command a TAN has to be manually entered by the operator, which however is time consuming and complicated. Such TAN procedures are also sensitive in case of operator faults.

Within a closed environment the implementation of such a TAN procedure must guarantee the independence of two processing channels within the non-safe operator terminal: a first channel for receiving the TAN from the safe system and display it to the operator, a second channel for receiving the entered TAN from the operator and transferring the entered TAN to the safe system. Within an open environment it must be additionally guaranteed not to compromise the transmissions within the first and the second channel. Therefore known systems use encrypted transmission. Also for the critical command procedure the independence of the processing of the replicated input within the operator terminal and the independence of the transmission of replicated input to the safe computer must be guaranteed. This however requires dedicated properties to both end points of communication, in particular both end points need to be validated and assessed.

### Object of the invention

It is therefore an object of the invention to provide a simplified method for handling a safety critical command in a computer network with reduced requirements concerning hardware and software.

### Description of the invention

This object is achieved by a method according to claim 1 and a use of a computer network according to claim 10 that comprises means adapted to implement the inventive method.

The inventive method can be carried out in a computer network with a safe computer and a non-safe operator terminal, the command concerning a transaction on an element. According to the invention the method comprises:
- transfer of the command from the non-safe operator terminal to the safe computer;
- generation of a TAN, the TAN identifying the command;
- generation of a first executable code and a second executable code by the safe computer, the second code containing the TAN, the first code being capable of displaying a query on a display device of the non-safe operator terminal and the second code being capable of enabling execution of the transaction;
- encryption of the codes by the safe computer;
- transmission of the encrypted codes to the non-safe operator terminal;
- decryption of the codes by the non-safe operator terminal;
- execution of the first code on the non-safe operator terminal, whereby a query is displayed to the operator with an invitation to confirm the query, i.e. to confirm whether the critical command shall be executed or aborted;
- in case of a confirmation by the operator, the second code is executed and the TAN is transferred to the safe computer.

A "non-safe" operator terminal is an operator terminal which does not comply with SIL 2, in particular which does not comply with any safety integrity level. The only functionalities which are mandatory for the non-safe operator terminal are the following: Be able to send and receive messages from/to the safe computer; be able to identify messages that contain encrypted codes; be able to decrypt such messages, and offer a platform to execute the decrypted code. The non-safe operator terminal does not need to have any functionality, which is related to the correct processing of the confirmation procedure. A "safe computer" is a computer that fulfills SIL 2 or better, preferably SIL 4.

The methodology of the inventive method is based on transmission of encrypted executable codes, which allows the usage of a non-safe operator terminal. The inventive method allows safe transfer of TANs from a safe system to a non-safe operator terminal and backwards while using the same transmission channel. Only one end point (including the code to be transmitted and to be executed by the non-safe operator terminal) of the communication needs to have dedicated properties that need validation and assessment. Dedicated properties refer in particular to independent processing channels, wherein the independency has to be given not only for transmission but also for processing, which means that the corresponding end point needs to comply with SIL ≧ 0. According to the present invention this is only required for the safe computer, but not for the operator terminal (in contrast to state of the art methods) at which the codes are executed.

According to the invention the command is entered by an operator at the non-safe operator terminal. The safety critical command is then transferred to a safe system for execution. To ensure that the received command is not compromised by the non-safe device or a non-safe and non-secured transmission, the safe system generates executable codes which are encrypted and transferred to the non-safe operator terminal, thereby contributing to a secured transmission.

The TAN is preferably generated by the safe computer and identifies the transaction to be carried out (e.g. switch point A to position X).

Preferably the TAN comprises a one-time password (OTP). The encryption of the codes, in particular of the second code which comprises the TAN, can be done by a one-time pad-encryption. Due to the encryption of the codes by the non-safe operator terminal an instantaneous correct functioning of the non-safe operator terminal for executing the code is ensured.

The first executable code causes the non-safe operator to display a query on a display device according to encoded instructions which has been received by the safe computer. The query requests the operator's confirmation whether the critical command shall be executed or aborted and sends back a TAN-based confirmation message via the second executable code.

The decryption of the second code is preferably carried out after confirmation by the operator in order to reduce the time between decryption and transmission of the TAN, which causes the safe computer to execute the safety critical transaction.

The encryption and decryption procedure are aligned between safe computer and non-safe operator terminal. Appropriate keys are exchanged prior to encryption. In addition, the execution environment for first code and the second code (used binary type, used external libraries) should be aligned between safe computer and non-safe operator terminal. Preferably a java byte-code is used.

The inventive method allows a replacement of the complex critical command procedure known from the state of the art, which demands a safe operator terminal. From an operator's perspective the critical command procedure is simplified, since no duplication of input is demanded. Nevertheless it is possible to realize a behavior as known from critical command procedure by time supervised click on two buttons. From a supplier's perspective the need to have a safe operator terminal will disappear, i.e. neither hardware nor software of the non-safe terminal needs to fulfill any demands on safety integrity level (SIL). No further assessment activities (validation, safety case, assessment report) are required for the operator terminal. Thus the operator terminal can be made of COTS (commercial off-the-shelf) hardware and software which safe costs.

The inventive method allows parallel/concurrent processing of critical commands. By using the inventive method, it is not necessary to provide independent channels for transmission of the codes, i.e. a single channeled non-safe operator terminal can be used. Besides by providing the encryption and the TAN the communication channels between the operator terminal and the safe computer do not require closed networks anymore.

### Preferred variants

By execution of the first code a preferred variant of the inventive method displays a window on the display device, the window showing a reflection of the command and at least two buttons for confirmation and abortion of the transaction respectively. The display of the query at the non-safe operator terminal can be textual or graphical. Alternatively or in addition the display and/or the confirmation can be acoustic. In case that a critical command procedure is realized by the inventive method, more than two buttons are required. The second code is then split into the corresponding number (corresponding to the number of buttons) of subcodes, the first subcode being the callback for the first button for activating the second button.

It is preferred that the window further shows information about the status of the element (e.g. "point A is in position Y") and/or of the status of the environment of the element (e.g. "related track section is occupied") on which the transaction is to be performed. The status information helps the operator to decide whether the suggested transaction is uncritical or dangerous under the given circumstances.

In an advantageous variant of the inventive method the second code contains a call back function for the first code, the call back function transferring the TAN.

In order to prevent repeated or delayed execution of the transaction the TAN is preferably equipped with a time restriction. In case the TAN is not transmitted within a predetermined time slot or before a predetermined time limit, the transaction is not executed despite of a correct TAN.

In a special variant the first code and the second code are incorporated in one program file.

Alternatively the first code and the second code are separate program files. By providing the codes as separate program files the time between execution of the first code and the second code can be chosen longer compared to both codes being part of a single program, e.g. several minutes. In this case for parallel/concurrent processing of critical commands the first code and the second code of a specified command are linked with each other in order to identify the codes corresponding to said specified command. This can be done by providing each code with an identification feature, e.g. key or a checksum or a further TAN which is used for encryption and/or assignment of the second code. E.g. the first code can be provided with a key for decryption of the second code. Alternatively the first code can be provided with a key which is compared with the second code.

Preferably the second code is decrypted immediately before executing the second code. Thus the successful encryption increases the confidence in the correct operation of the non-safe operator terminal.

In order to minimize the operator's interaction, the confirmation of the operator can be carried out by means of a one-click technique.

The inventive method can be advantageously used for transactions concerning railway transportation or other guided vehicles.

The present invention also concerns the use of a computer network system comprising a safe computer and a non-safe operator terminal for safe operation procedures of a predetermined safety integrity level in particular for railway transportation, wherein the safe computer and the non-safe operator terminal are connected to each other in order to transmit messages, wherein the non-safe operator terminal comprises a display device and is set up to identify an encrypted code, to decrypt the encrypted code and to display a query on the display device, wherein the safe computer complies with the predetermined safety category and the non-safe operator terminal does not comply with the predetermined safety category.

The inventive method is preferably used for technical systems for which IEC 61508, or standards derived from IEC 61508, or similar standards apply, where human interaction to safe services is needed.

Preferably the predetermined transmission system category is of category 1, 2 or 3 according to EN50159:2010.

The inventive method can be used for traffic management and safe operation of signaling systems, route control systems, train control systems, and interlocking systems. "Safe operation" is summarizing the process for safe critical command transmission for execution. "Safe transmission" refers to a following voting process, which enables a fault revelation within the process only with means of the components of the computer network used for the inventive method.

The base of the invention is the execution of a foreign code (code generated by the safe computer) on a non-safe operator terminal, wherein the code is prepared on a safe system just for that purpose and protected by using cryptographic methods. According to the invention it is complete up to the safe computer to control the safety mechanisms that apply for the safe operation procedure. Thus the functional independence of the safety mechanism to peer functions owed by the non-safe operator terminal is given.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawings.
- Fig. 1: shows the basic method steps of the inventive method.
- Fig. 2: shows a detailed flow chart of a preferred variant of the inventive method, in which the steps are related to the compounds by means of which the steps are carried out.

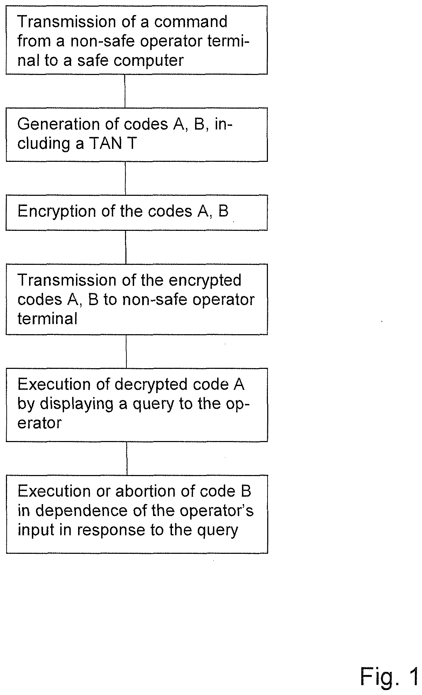

The inventive method comprises the steps shown in **Fig. 1****.** A safety critical command **fᵢ(eₖ)** is transmitted from a non-safe operator terminal to a safe computer, wherein fᵢ denotes a function (e.g. f₁: switch a point to X) and eₖ denotes the element on which the function is to be carried out (e.g. e₁: point A)". The safe computer generates a first code **A** and a second code **B,** wherein the second code B includes a TAN **T.** The codes A, B are encrypted and transmitted to the non-safe operator terminal, where the first code A is executed, resulting in displaying a query to the operator. In dependence of the operator's input in response to the query the second code B is executed or aborted.

In contrast to the state of the art methods the code A, B are executed as "foreign codes", i.e. the codes A, B are generated at the safe computer and are subjected to the safety requirements of the safe computer but are executed at the non-safe operator terminal which is not responsible for correctness of the codes and safety integrity, which is up to the safe computer. "Safety integrity" in particular refers to the correlation of first code A and second code B, the OTP quality of the TAN T and the correctness of the codes A, B. The correct operation of the non-safe operator terminal can be verified or falsified by the correct encryption of code A and B at the non-safe operator terminal.

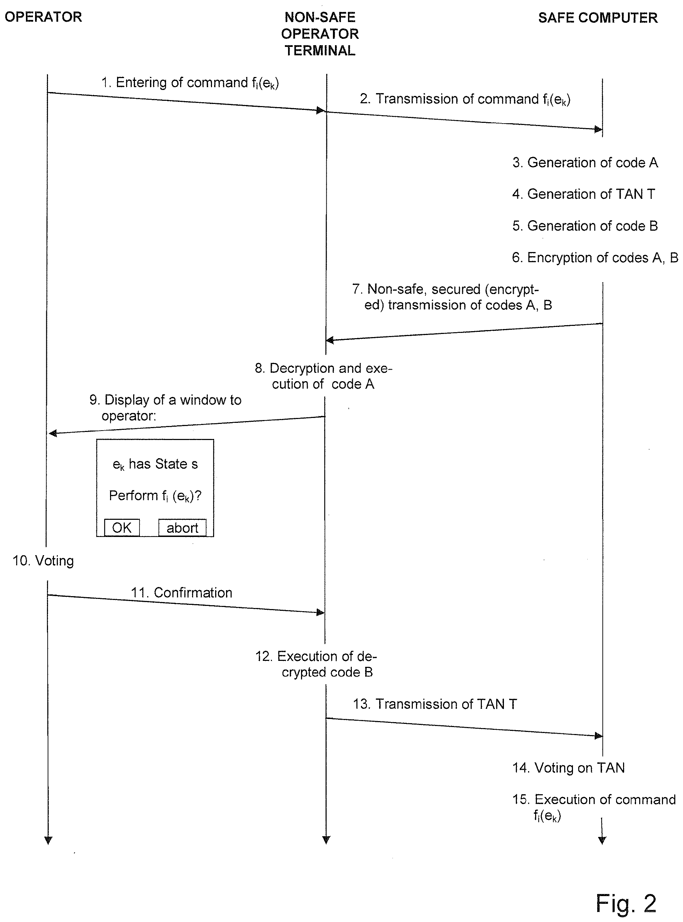

**Fig. 2** shows a detailed sequence of the steps of a preferred variant of the inventive method, wherein the method steps are assigned to the component at which the steps are carried out. First the safety critical command fᵢ(eₖ) is entered by an operator at the non-safe operator terminal **(step 1)** prior to the transfer from the non-safe operator terminal to a safe computer **(step 2).** Before execution of the command fᵢ(eₖ), it must be ensured, that the received safety critical command fᵢ(eₖ) is correct and not compromised (modified). Often it must be ensured additionally that the element eₖ is in the correct state **s** to perform function fᵢ. The first code A generated by the safe computer **(step 3)** presents a window containing a reflection of the received critical command fᵢ(eₖ) and two buttons to confirm respectively abort the operation. Additionally the window can also contain information about a status s of element eₖ and or a status of the environment (not shown). The second code B generated by the safe computer **(step 5)** contains a call back function for the first code A. The call back function transfers a TAN **T,** which also has been generated by the safe computer (e.g. as one-time-password) being optional equipped with a time restriction **(step 4).** The TAN T safely identifies the critical command fᵢ(eₖ) for execution. As code A and code B has been generated on the safe system, there is functional independence of the codes A, B and the data and codes A, B owned by/located on the non-safe operator terminal. Both, code A and code B then are encrypted by the safe computer **(step 6)** and transferred to the non-safe operator terminal **(step 7).**

On the non-safe operator terminal the first code A is decrypted and executed **(step 8).** By executing the first code A the window is displayed to the operator **(step 9).** The operator now votes on whether the safety critical command fᵢ(eₖ) is to be performed or aborted **(step 10)** and accordingly sends a confirmation or a rejection to the non-safe operator terminal **(step 11),** e.g. by a one click operation on a "OK" or "abort" button. For one-click operator confirmation codes A and B are prepared in a manner, that unintended execution of the second code B is prevented (e.g. due to a malfunction of the non-safe operator terminal). Therefore, in case of a mouse operation the click-event is accepted only if the mouse moves only within the window of code A right before this click. This is supervised by the code A respectively code B. In case of touch screens equivalent defined gestures are used and supervised.

In case the operator confirms to perform the requested safety critical command fᵢ(eₖ), the decrypted second code B is executed by the non-safe operator terminal **(step 12)** and TAN T will be transferred to the safe computer **(step 13).** A decryption of the second code B is carried out by the non-safe operator terminal prior or after the confirmation of the operator (not shown). The safe computer can finally vote on correctness of the received TAN **(step 14)** and execute the critical command in case of positive voting **(step 15)**.

The safe operation according to the invention is still TAN based. But the involvement of the operator into that well-known TAN procedure can be reduced to a minimum: one-click confirmation.

The presented invention presumes a cryptographic infrastructure both on the non-safe operator terminal and on the safe system. The inventive safe operation via the non-safe operator terminal using cryptographic methods grants a minimized user interaction and built-in independence of incoming and outgoing information processing although using a single channeled non-safe operator terminal and a single channeled transmission, where "safe" is related to failure revelation.

With the inventive method a variety of failure modes can be detected and treated, some of which are described in the following:
In case of a significant delay or a suppression between steps 1 and 8, step 8 will be too late or not executed which is obviously revealed by the operator.

Any corruption or misrouting during step 1 and 2 (e.g. a modified command) is revealed by the operator by voting whether the displayed command should be executed or aborted (step 10).

An insertion of a transmission of a command (step 2) will also be revealed during step 9.

Any misrouting during the transmission of codes A, B (step 7) is revealed for the false receiver during decryption of code A (step 8), since no successful decryption is possible and during voting (step 9) due to suppression for the correct receiver side.

Any unintended execution of code A (at step 8) is revealed by the properties of code A (reflection of the critical command) during the voting (step 10).

Any unintended transmission of the TAN T (step 13) can be prevented by the properties of code B, in particular by the properties of the TAN T, that can be generated as OTP dedicated to the request "Perform fi (ek)" (step 4).

Any significant delay or suppression during the transmission of the TAN T (step 13) is revealed by missing or delayed reaction of the safe system within steps 14 and 15.

Any insertion or corruption or misrouting during the transmission of the TAN T (step 13) is revealed during the voting (step 14).

### List of reference signs

- A: first code
- B: second code
- T: TAN
- fᵢ: function
- eₖ: element
- fᵢ(eₖ): safety critical command
- s: status of the element

## Claims

1. Method for handling a safety critical command (fᵢ(eₖ)) in a computer network with a safe computer and a non-safe operator terminal, the command concerning a transaction on an element (eₖ), the method comprising:
- transfer of the command (fᵢ(eₖ)) from the non-safe operator terminal to the safe computer;
- generation of a TAN (T), the TAN (T) identifying the command; the method further **characterised by**
- generation of a first executable code (A) and a second executable code (B) by the safe computer, the second code (B) containing the TAN (T), the first code (A) being capable of displaying a query on a display device of the non-safe operator terminal and the second code (B) being capable of enabling execution of the transaction;
- Encryption of the codes (A, B) by the safe computer;
- transmission of the encrypted codes (A, B) to the non-safe operator terminal;
- decryption of the codes (A, B) by the non-safe operator terminal;
- execution of the first code (A) on the non-safe operator terminal. whereby a query is displayed to the operator with an invitation to confirm whether the critical command shall be executed or aborted;
- in case of a confirmation by the operator, the second code (B) is executed and the TAN (T) is transferred to the safe computer.

2. Method according claim 1, **characterized in that** by execution of the first code (A) a window is displayed on the display device, the window showing a reflection of the command and at least two buttons for confirmation and abortion of the transaction respectively.

3. Method according claim 2, **characterized in that** the window further shows information about the status (s) of the element (eₖ) and or the status of the environment of the element (eₖ) on which the transaction is to be performed.

4. Method according to one of the preceding claims, **characterized in that** the second code (B) contains a call back function for the first code (A), the call back function transferring the TAN (T).

5. Method according to one of the preceding claims, **characterized in that** the TAN (T) is equipped with a time restriction.

6. Method according to one claims 1 through 5, **characterized in that** the first code (A) and the second code (B) are incorporated in one program file.

7. Method according to claims 1 through 5, **characterized in that** the first code (A) and the second code (B) are separate program files.

8. Method according to one of the preceding claims, **characterized in that** the confirmation of the operator is carried out by means of a one-click technique.

9. Method according to one of the preceding claims, **characterized in that** the method is used for transactions concerning railway transportation or other guided vehicles.

10. Use of a computer network system that comprises means adapted to implement the method of one of the preceding claims.

11. Use according to claim 10, **characterized in that** a safe computer and a and a non-safe operator terminal for safe operation procedures of a predetermined safety integrity level in particular for railway transportation are provided, wherein the safe computer and the non-safe operator terminal are connected to each other in order to transmit messages, wherein the non-safe operator terminal comprises a display device and is set up to identify an encrypted code (A, B), to decrypt the encrypted code (A, B) and to display a query on the display device
wherein the safe computer complies with the predetermined safety category and the non-safe operator terminal does not comply with the predetermined safety category.

## Patentansprüche

1. Verfahren zum Handhaben eines sicherheitskritischen Befehls (fᵢ(eₖ)) in einem Computernetzwerk mit einem sicheren Computer und einem nicht sicheren Bedienterminal, wobei der Befehl eine Transaktion an einem Element (eₖ) betrifft, wobei das Verfahren aufweist:
- Transfer des Befehls (fᵢ(eₖ)) von dem nicht sicheren Bedienterminal an den sicheren Computer;
- Erzeugen einer TAN (T), wobei die TAN (T) den Befehl identifiziert; wobei das Verfahren weiterhin **gekennzeichnet ist durch**
- Erzeugen eines ersten ausführbaren Codes (A) und eines zweiten ausführbaren Codes (B) durch den sicheren Computer, wobei der zweite Code (B) die TAN (T) enthält, der erste Code (A) eine Anfrage auf einer Displayvorrichtung des nicht sicheren Bedienterminals anzeigen kann und der zweite Code (B) das Ausführen der Transaktion aktivieren kann;
- Verschlüsseln der Codes (A, B) durch den sicheren Computer;
- Übertragen der verschlüsselten Codes (A, B) an das nicht sichere Bedienterminal;
- Entschlüsseln der Codes (A, B) durch das nicht sichere Bedienterminal;
- Ausführen des ersten Codes (A) an dem nicht sicheren Bedienterminal, wodurch dem Bediener eine Anzeige angezeigt wird mit einer Aufforderung zu bestätigen, ob der kritische Befehl ausgeführt oder abgebrochen werden soll;
- im Falle einer Bestätigung durch den Bediener wird der zweite Code (B) ausgeführt und die TAN (T) an den sicheren Computer übertragen.

2. Verfahren nach Anspruch 1, **dadurch gekennzeichnet, dass** durch Ausführen des ersten Codes (A) ein Fenster auf der Displayvorrichtung angezeigt wird, wobei das Fenster ein Abbild des Befehls und mindestens zwei Schaltflächen für die Bestätigung bzw. Abbruch der Transaktion zeigt.

3. Verfahren nach Anspruch 2, **dadurch gekennzeichnet, dass** das Fenster weiterhin Informationen über den Status (s) des Elements (eₖ) und oder den Status der Umgebung des Elements (eₖ), an dem die Transaktion ausgeführt werden soll, zeigt.

4. Verfahren nach einem der vorhergehenden Ansprüche, **dadurch gekennzeichnet, dass** der zweite Code (B) eine Rückruffunktion für den ersten Code (A) enthält, wobei die Rückruffunktion die TAN (T) überträgt.

5. Verfahren nach einem der vorhergehenden Ansprüche, **dadurch gekennzeichnet, dass** die TAN (T) mit einer Zeitbeschränkung ausgerüstet ist.

6. Verfahren nach einem der Ansprüche 1 bis 5, **dadurch gekennzeichnet, dass** der erste Code (A) und der zweite Code (B) in einer Programmdatei enthalten sind.

7. Verfahren nach den Ansprüchen 1 bis 5, **dadurch gekennzeichnet, dass** der erste Code (A) und der zweite Code (B) getrennte Programmdateien sind.

8. Verfahren nach einem der vorhergehenden Ansprüche, **dadurch gekennzeichnet, dass** die Bestätigung des Bedieners mittels einer One-Click-Technik ausgeführt wird.

9. Verfahren nach einem der vorhergehenden Ansprüche, **dadurch gekennzeichnet, dass** das Verfahren für Transaktionen betreffend Schienenverkehr oder andere Transportfahrzeuge verwendet wird.

10. Verwendung eines Computernetzwerksystems, das Mittel aufweist, die dazu eingerichtet sind, das Verfahren nach einem der vorhergehenden Ansprüche auszuführen.

11. Verwendung nach Anspruch 10, **dadurch gekennzeichnet, dass** ein sicherer Computer und ein nicht sicheres Bedienterminal für sichere Betriebsverfahren eines vorgegebenen Sicherheitsintegritätslevels insbesondere für den Schienenverkehr bereitgestellt werden,
wobei der sichere Computer und das nicht sichere Bedienterminal miteinander verbunden sind, um Nachrichten zu übertragen,
wobei das nicht sichere Bedienterminal eine Displayvorrichtung aufweist und so eingestellt ist, dass es einen verschlüsselten Code (A, B) identifiziert, den verschlüsselten Code (A, B) entschlüsselt und eine Anfrage auf der Displayvorrichtung anzeigt,
wobei der sichere Computer die vorgegebene Sicherheitskategorie erfüllt und das nicht sichere Bedienterminal die vorgegebene Sicherheitskategorie nicht erfüllt.

## Revendications

1. Procédé pour gérer une commande critique de sécurité (fᵢ(eₖ)) dans un réseau informatique qui comporte un ordinateur sécurisé et un terminal d'opérateur non sécurisé, la commande concernant une transaction portant sur un élément (eₖ), le procédé comprenant :
- le transfert de la commande (fᵢ(eₖ)) depuis le terminal d'opérateur non sécurisé à l'ordinateur sécurisé ;
- la génération d'un TAN(T), le TAN(T) identifiant la commande ; le procédé étant en outre **caractérisé par** :
- la génération d'un premier code exécutable (A) et d'un second code exécutable (B) par l'ordinateur sécurisé, le second code (B) contenant le TAN(T), le premier code (A) disposant de la capacité d'afficher une requête sur un dispositif d'affichage du terminal d'opérateur non sécurisé et le second code (B) disposant de la capacité de permettre l'exécution de la transaction ;
- le cryptage des codes (A, B) par l'ordinateur sécurisé ;
- la transmission des codes cryptés (A, B) au terminal d'opérateur non sécurisé ;
- le décryptage des codes (A, B) par le terminal d'opérateur non sécurisé ;
- l'exécution du premier code (A) sur le terminal d'opérateur non sécurisé, d'où il résulte qu'une requête est affichée pour l'opérateur avec une invitation à confirmer si la commande critique doit être exécutée ou abandonnée ;
- dans le cas d'une confirmation par l'opérateur, le second code (B) est exécuté et le TAN(T) est transféré à l'ordinateur sécurisé.

2. Procédé selon la revendication 1, **caractérisé en ce que**, au moyen de l'exécution du premier code (A), une fenêtre est affichée sur le dispositif d'affichage, la fenêtre présentant un reflet de la commande et au moins deux boutons pour respectivement la confirmation et l'abandon de la transaction.

3. Procédé selon la revendication 2, **caractérisé en ce que** la fenêtre présente en outre une information qui concerne le statut (s) de l'élément (eₖ) et/ou le statut de l'environnement de l'élément (eₖ) sur lequel la transaction doit être réalisée.

4. Procédé selon l'une quelconque des revendications précédentes, **caractérisé en ce que** le second code (B) contient une fonction de rappel automatique du premier code (A), la fonction de rappel automatique transférant le TAN(T).

5. Procédé selon l'une quelconque des revendications précédentes, **caractérisé en ce que** le TAN(T) est muni d'une restriction temporelle.

6. Procédé selon l'une quelconque des revendications 1 à 5, **caractérisé en ce que** le premier code (A) et le second code (B) sont incorporés dans un seul et même fichier de programme.

7. Procédé selon l'une quelconque des revendications 1 à 5, **caractérisé en ce que** le premier code (A) et le second code (B) sont des fichiers de programme séparés.

8. Procédé selon l'une quelconque des revendications précédentes, **caractérisé en ce que** la confirmation de l'opérateur est mise en oeuvre au moyen d'une technique à un seul clic.

9. Procédé selon l'une quelconque des revendications précédentes, **caractérisé en ce que** le procédé est utilisé pour des transactions qui concernent le transport ferroviaire ou d'autres véhicules guidés.

10. Utilisation d'un système de réseau informatique qui comprend un moyen qui est adapté de sorte qu'il met en oeuvre le procédé selon l'une des revendications précédentes.

11. Utilisation selon la revendication 10, **caractérisée en ce que** :
un ordinateur sécurisé et un terminal d'opérateur non sécurisé pour des procédures de fonctionnement sécurisées d'un niveau d'intégrité prédéterminé en termes de sécurité, en particulier pour le transport ferroviaire, sont prévus ;
dans lequel l'ordinateur sécurisé et le terminal d'opérateur non sécurisé sont connectés l'un à l'autre afin qu'ils transmettent des messages ;
dans lequel le terminal d'opérateur non sécurisé comprend un dispositif d'affichage et il est configuré de sorte qu'il identifie un code crypté (A, B), qu'il décrypte le code crypté (A, B) et qu'il affiche une requête sur le dispositif d'affichage ;
dans lequel l'ordinateur sécurisé respecte la catégorie de sécurité prédéterminée et le terminal d'opérateur non sécurisé ne respecte pas la catégorie de sécurité prédéterminée.
